(19) Europäisches Patentamt
European Patent Office
Office européen des brevets

(11) **EP 1 211 797 B1**

(12) **EUROPÄISCHE PATENTSCHRIFT**

(45) Veröffentlichungstag und Bekanntmachung des Hinweises auf die Patenterteilung:
**14.10.2009 Patentblatt 2009/42**

(51) Int Cl.:
*H02M 1/12* *(2006.01)*   *H02M 1/15* *(2006.01)*

(21) Anmeldenummer: **01127332.3**

(22) Anmeldetag: **16.11.2001**

(54) **Verringerung von Systemeigenschwingungen bei einem an einem Umrichter mit Spannungszwischenkreis betriebenen elektrischen Zwischenkreises vom Netz sowie korrespondierender Spannungszwischenkreis-Umrichter**

Reduction of self-oscillation in an intermediate electric circuit driven by a voltage-controlled, mains-connected intermediate circuit and corresponding voltage-controlled inverter

Réduction des fréquences propres dans un convertisseur à circuit intermédiaire à tension régulée, connecté au réseau et convertisseur à circuit intermédiaire à tension régulée correspondant

(84) Benannte Vertragsstaaten:
**DE FR GB**

(30) Priorität: **29.11.2000 DE 10059331**

(43) Veröffentlichungstag der Anmeldung:
**05.06.2002 Patentblatt 2002/23**

(73) Patentinhaber: **SIEMENS AKTIENGESELLSCHAFT**
**80333 München (DE)**

(72) Erfinder:
• **Goepfrich, Kurt**
  **91058 Erlangen (DE)**
• **Raith, Sebastian**
  **91056 Erlangen (DE)**
• **Segger, Bernd**
  **91052 Erlangen (DE)**

(56) Entgegenhaltungen:
EP-A- 0 746 086   US-A- 4 935 859
US-A- 5 235 503   US-A- 5 936 855

**Beschreibung**

Die Erfindung betrifft ein Verfahren zur Verringerung von Systemeigenschwingungen gegen Erdpotential bei einem elektrischen Antrieb mit einem Spannungszwischenkreis-Umrichter mit gesteuertem Eingangsstromrichter und mit eingangsseitiger Induktivität, insbesondere einer Netzeingangsdrossel im Hochsetzstellerbetrieb, und mit daran angeschlossenem elektrischen Motor, insbesondere einem solchen in Polspultechnik, sowie einen entsprechenden elektrischen Antrieb und Spannungszwischenkreis-Umrichter.

In heutigen Umrichtersystemen mit Spannungszwischenkreis, insbesondere in mehrachsigen solchen Umrichtersystemen, können sich Systemschwingungen ausbilden, die praktisch nicht bedämpft werden. Dies betrifft im wesentlichen Umrichter mit Spannungszwischenkreis und einer geregelten Einspeisung in Form eines geregelten netzseitigen Stromrichters, auch als Eingangsstromrichter bezeichnet.

Umrichter dienen prinzipiell zum Betrieb von elektrischen Maschinen mit variabler Speisefrequenz. Ein solcher Zwischenkreis-Frequenzumrichter ermöglicht es, einen elektrischen Motor, z.B. eine Drehfeldmaschine wie etwa die Synchronmaschine, nicht mehr nur direkt am Netz und damit an eine starre Drehzahl gebunden zu betreiben, sondern es kann das starre Netz durch ein elektronisch erzeugtes frequenzvariables und auch amplitudenvariables Netz zur Speisung der elektrischen Maschine ersetzt werden.

Eine Entkopplung der beiden Netze, zum einen dem versorgenden Netz mit fester Amplitude und Frequenz und zum anderen dem die elektrische Maschine speisenden Netz mit variabler Amplitude und Frequenz, erfolgt über einen Gleichspannungsspeicher oder einen Gleichstromspeicher in Form des sogenannten Zwischenkreises. Solche Zwischenkreis-Umrichter weisen dabei im wesentlichen drei zentrale Baugruppen auf:

- einen netzseitigen Eingangsstromrichter, der ungesteuert (z.B. Diodenbrücken) oder gesteuert ausgeführt sein kann, wobei eine Energierückspeisung in des Netz nur mit einem gesteuerten Eingangsstromrichter möglich ist;
- einen Energiespeicher im Zwischenkreis in Form eines Kondensators bei einem Spannungszwischenkreis und einer Drossel bei einem Stromzwischenkreis;
- einen ausgangsseitigen Maschinenstromrichter bzw. Wechselrichter zur Speisung der Maschine, der in der Regel über eine Drehstrom-Brückenschaltung mit sechs löschbaren Stromventilen, z.B. IGBT-Transistoren, die Gleichspannung eines Spannungszwischenkreises in ein Drehspannungssystem umsetzt.

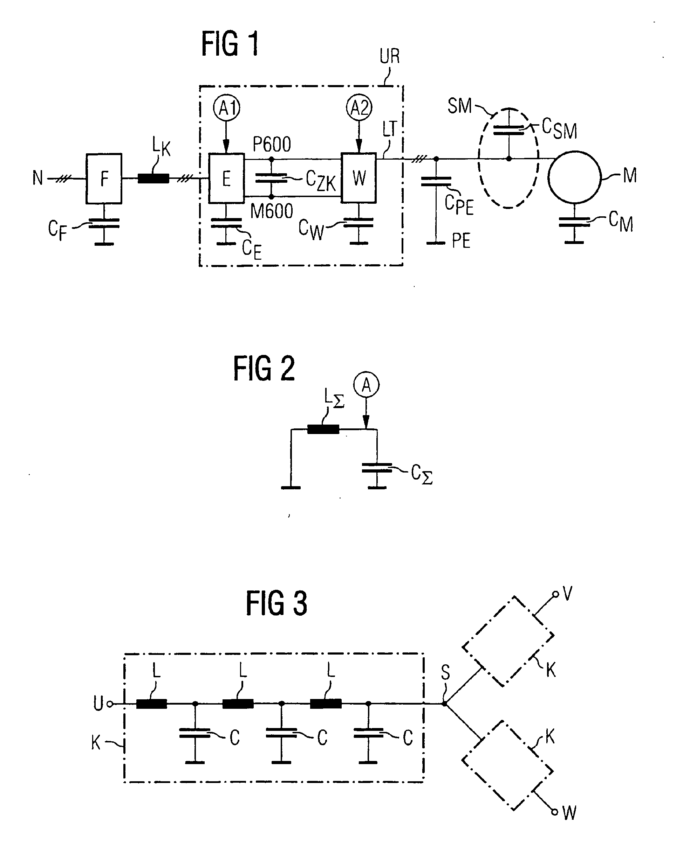

Ein solches Umrichtersystem mit Spannungszwischenkreis, das u.a. aufgrund eines sehr hohen Frequenz- und Amplitudenstellbereichs bevorzugt bei Haupt- und Servoantrieben in Werkzeugmaschinen, Robotern und Produktionsmaschinen zum Einsatz gelangt, ist in der Darstellung nach FIG 1 in Form einer Prinzipskizze gezeigt.

Der Umrichter UR ist über einen Filter F und eine Speicherdrossel mit der Induktivität $L_K$ an ein Drehstromnetz N angeschlossen. Der Umrichter UR weist die beschriebene Einspeisung E, einen Spannungszwischenkreis mit der Speicherkapazität $C_{ZK}$ und einen Ausgangswechselrichter W auf. Gezeigt ist eine geregelte Einspeisung E, die durch schaltende Bauelemente (z.B. eine Drehstrombrückenschaltung aus IGBT-Transistoren) geregelt betrieben wird, wodurch die Anordnung nach FIG 1 eine Anregung A1 erfährt. Der Wechselrichter W wird ebenfalls über weitere schaltende Bauelemente geregelt, z.B. wiederum mittels einer Drehstrombrückenschaltung mit sechs IGBT-Transistoren. Die Tatsache, dass auch im Wechselrichter Schalthandlungen stattfinden, stellt ebenfalls eine Anregung A2 des Systems dar. Der Kondensator $C_{ZK}$ im Spannungszwischenkreis ist zwischen die positive Zwischenkreisschiene P600 und die negative Zwischenkreisschiene M600 geschaltet. Der Wechselrichter ist ausgangsseitig über eine Leitung LT mit Schutzleiter PE und Schirmung SM mit einem Motor M in Form einer Drehstrommaschine verbunden.

Das festfrequente Drehstromnetz N speist nun über den Filter F und die Speicherdrossel $L_K$ mittels der geregelten Einspeisung den Zwischenkreiskondensator $C_{ZK}$ über den Eingangsstromrichter E, wobei der Eingangsstromrichter E (z.B. ein Pulsumrichter) mit der Speicherdrossel $L_K$ als Hochsetzsteller arbeitet. Nach dem Bestromen der Speicherdrossel $L_K$ wird diese mit dem Zwischenkreis verbunden und treibt den Strom entgegen der größeren Spannung in den Kondensator $C_{ZK}$. Dadurch kann die Zwischenkreisspannung auch über dem Scheitelwert der Netzspannung liegen.

Diese Kombination stellt somit quasi eine Gleichspannungsquelle dar. Aus dieser Gleichspannung formt der Wechselrichter W in der beschriebenen Weise wieder ein Drehspannungssystem, wobei die Ausgangsspannung im Gegensatz zur sinusförmigen Spannung eines Drehstromgenerators aufgrund der elektronischen Erzeugung über eine Brückenschaltung nicht den Verlauf einer idealen Sinusschwingung, sondern neben der Grundschwingung auch Oberwellen aufweist.

Neben den beschriebenen Elementen einer solchen Anordnung muss jedoch auch berücksichtigt werden, dass parasitäre Kapazitäten auftreten, die die Entstehung von Systemschwingungen in einem solchen Umrichtersystem begünstigen. So weisen neben dem Filter F mit einer Ableitkapazität $C_F$ auch der Eingangsstromrichter E, der Wechselrichter W und der Motor M Ableitkapazitäten $C_E$, $C_W$ und $C_M$ gegen Erde auf. Daneben treten zusätzlich eine Kapazität $C_{PE}$ der Leitung LT gegen den Schutzleiter PE und eine Kapazität $C_{SM}$ der Leitung LT gegen die geerdete Schirmung SM auf.

Die Erfinder haben nun erkannt, dass sich eine besonders ausgeprägte Anregung dieser Systemschwingungen in der Einspeisung E befindet. Je nach dem gewählten Regelungsverfahren zur Einspeisung werden dabei 2 oder 3 Phasen des Netzes N kurzgeschlossen, um die Speicherdrossel $L_K$ zu bestromen. Werden alle drei Phasen U, V, W kurzgeschlossen, so liegt entweder die positive P600 oder die negative Zwischenkreisschiene M600 hart am Sternpunkt des versorgenden Netzes (i.d.R. nahe Erdpotenzial je nach Nullsystemanteil). Werden 2 Phasen des Netzes N kurzgeschlossen, so liegen die betreffenden Zwischenkreisschienen P600 und M600 hart auf einem induktiven Spannungsteiler der 2 Netzphasen.

Je nach Situation der Netzspannungen ist diese Spannung in der Nähe des Erdpotenzials (ca. 50-60V). Wegen der in der Regel großen Zwischenkreiskapazität $C_{ZK}$ (stetiger Spannungsverlauf) liegt die andere Zwischenkreisschiene 600V tiefer bzw. höher und kann damit auch die verbleibende Phase des Netzes verreißen. In beiden Fällen wird der Zwischenkreis besonders stark aus seiner "natürlichen", symmetrischen Ruhelage (+/- 300V gegen Erde) ausgelenkt, was eine besonders starke Anregung der Systemschwingung darstellt.

Im Hinblick auf die Entstehung von unerwünschten Systemschwingungen erlaubt der für den Anwendungsbereich relevante Frequenzbereich unterhalb von 50 bis 100 kHz die Berechnung einer Resonanzfrequenz mit konzentrierten Elementen. Dabei sind die Ableitkapazitäten $C_F$ gegen Erde im Filter F in der Regel so groß, dass diese nicht frequenzbestimmend wirken. Dabei kann man davon ausgehen, dass eine dominante Anregung zu Schwingungen vor den geschilderten Kapazitäten erfolgt und die Filterableitkapazität $C_F$ außer Betracht bleiben kann.

Die Resonanzfrequenz $f_{res}(sys)$ dieses Systems, die im folgenden mit $f_{sys}$ bezeichnet wird, ergibt sich somit zu:

$$f_{sys} = \frac{1}{2\pi\sqrt{L_\Sigma \cdot C_\Sigma}} \qquad (1)$$

mit

$$L_\Sigma \;=\; L_K \;+\; L_F \qquad (2)$$

wobei $L_K$ den dominanten Anteil darstellt und $L_F$ die umrichterseitig wirksamen asymmetrischen induktiven Elemente im Filter (z.B. stromkompensierte Drosseln) sind, und

$$C_\Sigma \;=\; C_E \;+\; C_W \;+\; C_{PE} \;+\; C_{SM} \;+\; C_M \qquad (3)$$

Dieser Zusammenhang ist in der Darstellung nach FIG 2 schematisch gezeigt. Dabei bilden $L_\Sigma$ und $C_\Sigma$ einen passiven Kreis, der durch eine Anregung A angeregt wird und sich auf seine natürliche Resonanzfrequenz $f_{sys}$ einschwingt.

Als Folge bekommen die Potenziale der Zwischenkreisschienen P600 und M600 zusätzlich zu den betriebsbedingten Verschiebungen mit beispielsweise 600V Amplitude eine zusätzliche unerwünschte Schwingung mit einer Amplitude von bis zu mehreren hundert Volt aufmoduliert.

Bei elektrischen Motoren M allgemein, vor allem aber wenn sie in Polspultechnik ausgeführt sind (z.B. Torquemotoren), kann ein Frequenzgang mit ausgeprägten Resonanzüberhöhungen gegen Erdpotential auftreten, wenn sie an allen Motorklemmen gleichtaktig gegen Erde angeregt werden, z.B. durch die vorangehend dargestellten unerwünschten Systemschwingungen.

Erklärbar sind diese Resonanzstellen durch ein asymmetrisches Ersatzschaltbild einer Kettenleiterschaltung K parasitärer Elemente (Induktivitäten L und Ableitkapazitäten C) in der Motorwicklung, wie sie in FIG 3 schematisch skizziert ist. Dabei ist beispielhaft der Wicklungsstrang einer Phase U eines Drehstrommotors M mit den drei Phasen U, V, W gezeigt, deren Wicklungsstränge im Motorsternpunkt S elektrisch miteinander verbunden sind. Die Eingangsspannungen des vom Wechselrichter W generierten dreiphasigen Drehstroms liegen an den dem Sternpunkt S gegenüberliegenden Außenklemmen der jeweiligen Wicklungsstränge an.

Dies trifft insbesondere bei Motoren in Polspultechnik zu, bei denen einzelne Kettenvierpole des Kettenleiters K aufgrund des Aufbaus makroskopisch plausibel sind und im wesentlichen einer einzelnen Polspule entsprechen. Bei der Polspultechnik weisen die aus Elektroblechen bestehenden Magnetkerne Zähne auf, die als Polkerne dienen, auf die vorgefertigte Spulen aufgesetzt und entsprechend verschaltet werden. Die einzelnen Induktivitäten L sind, wie aus FIG 3 ersichtlich, elektrisch in Reihe geschaltet, wobei jede Polspule eine kapazitive Kopplung zum Polkern (Elektroblech) besitzt, auf dem die Spule aufgebracht ist. Diese jeweiligen Kapazitäten sind als Ableitkapazitäten C gegenüber Masse dargestellt, die vom magnetischen Kern gebildet wird.

Jedoch lässt sich das geschilderte Phänomen auch bei Motoren anderer Bauweise (z.B. in sogenannter wilder Wicklung) mit einem Modell eines Kettenleiters K erklären, indem dieser eine Ersatzschaltung mit identischen Vierpolen in Form von LC-Schwingkreisen darstellt, deren Elemente den Frequenzgang nachbilden.

Die Überhöhung tritt dabei im Bereich des Sternpunktes S auf, der normalerweise nicht gezielt auf Spannungsbelastungen ertüchtigt wird. Wenn die Systemschwingung des Umrichtersystems in der Nähe einer Motoreigenfrequenz liegt, dann kann das Isolationssystem gegen Erde, insbesondere am Sternpunkt S, überlastet werden und einen frühzeitigen Ausfall des Motors M zur Folge haben, da am Motorsternpunkt resonanzbedingt wesentlich höhere Spannungen als an den Motorklemmen auftreten können.

Diese Aussage gilt im Prinzip für alle Spannungsniveaus (Nieder-, Mittel- und Hochspannungssysteme), vor allem aber, wenn zum einen auf der Umrichterseite UR nach dem Hochsetzstellerprinzip (mit Speicherdrossel $L_K$) gearbeitet wird, und auf der anderen Seite im Motor M ein Frequenzgang mit ausgeprägten Resonanzüberhöhungen gegen Erdpotential auftritt, z.B. bei Motoren mit besonders niedriger Motoreigenfrequenz, weil hier die Eigendämpfung im Motor durch Wirbelstromverluste, Ummagnetisierungsverluste etc. besonders niedrig ist.

Aufgabe der vorliegenden Erfindung ist es daher, solche Systemeigenschwingungen in einem solchen Umrichtersystem wirksam zu vermeiden.

Gelöst wird diese Aufgabe gemäß der vorliegenden Erfindung durch ein Verfahren zur Verringerung von Systemeigenschwingungen gegen Erdpotential bei einem elektrischen Antrieb mit einem Spannungszwischenkreis-Umrichter mit gesteuertem Eingangsstromrichter und mit eingangsseitiger Induktivität, insbesondere einer Netzeingangsdrossel, und mit daran angeschlossenem elektrischen Motor, insbesondere einem solchen in Polspultechnik, indem der Spannungszwischenkreis periodisch zu auf einen Steuersatz des Eingangsstromrichters synchronisierten Zeitpunkten vom versorgenden Netz getrennt wird.

Arbeitet der gesteuerte Eingangsstromrichter mit der eingangsseitigen Netzeingangsdrossel nach dem Hochsetzstellerprinzip, so empfiehlt es sich nach der Erfindung, wenn der Spannungszwischenkreis periodisch zu auf einen Steuersatz des Eingangsstromrichters synchronisierten Zeitpunkten vom versorgenden Netz getrennt wird.

Wenn der Eingangsstromrichter im Blockstrombetrieb gesteuert wird, so hat es sich als günstig erwiesen, den Spannungszwischenkreis stets vom Eingangsstromrichter zu trennen, solange die eingangsseitige Induktivität bestromt wird.

Wenn der Eingangsstromrichter hingegen mit einem sinusbewerteten Pulsmuster gesteuert wird, so wird der Spannungszwischenkreis vorzugsweise stets vom Eingangsstromrichter getrennt wird, solange dieser Nullzeiger schaltet. Arbeitet der Eingangsstromrichter mit einer allgemeinen Raumzeigermodulation, so wird der Spannungszwischenkreis vorteilhafterweise immer dann vom Eingangsstromrichter getrennt, solange dieser Nullzeiger schaltet.

Das erfindungsgemäße Abkoppeln des Spannungszwischenkreises ermöglicht es bei einem Blockstrombetrieb oder Sinusstrombetrieb zur Ansteuerung des Eingangsstromrichters, dass der Spannungszwischenkreis über Y-Kondensatoren gegenüber Erdpotential symmetriert wird.

Bei der periodischen Trennung des Spannungszwischenkreises vom Eingangsstromrichter haben sich schaltende Leistungshalbleiterschalter, insbesondere IGBT-Transistoren, als vorteilhaft erwiesen.

Besonders gute Resultate lassen sich erzielen, wenn der Spannungszwischenkreis zweiphasig vom Eingangsstromrichter getrennt wird. Dies wird z.B. erreicht, indem in jede Zuleitung zwischen dem Eingangsstromrichterausgang und den beiden Anschlüssen des Zwischenkreiskondensators ein IGBT-Transistor geschaltet wird.

Die vorstehende Aufgabe der Erfindung wird ferner durch einen elektrischen Antrieb mit einem Spannungszwischenkreis-Umrichter, mit gesteuertem Eingangsstromrichter, mit eingangsseitiger Induktivität, insbesondere einer Netzeingangsdrossel, und mit daran angeschlossenem elektrischen Motor, insbesondere einem Motor in Polspultechnik, gelöst.

Dies wird durch mindestens ein zusätzliches Schaltmittel zum periodischen Trennen des Spannungszwischenkreises vom versorgenden Netz erreicht.

Diese Prinzip erweist sich besonders bei einem Spannungszwischenkreis-Umrichter mit gesteuertem Eingangsstromrichter und mit eingangsseitiger Netzeingangsdrossel zum Betrieb nach dem Hochsetzstellerprinzip als vorteilhaft.

Dabei hat es sich weiter als vorteilhaft erwiesen, wenn jedes Schaltmittel zum periodischen Trennen des Spannungszwischenkreises vom Eingangsstromrichter auf einen Steuersatz des Eingangsstromrichters synchronisierbar ist, z.B. wenn jedes Schaltmittel zum synchronisierten Abkoppeln des Spannungszwischenkreises vom Eingangsstromrichter während geeigneter Zeitpunkte zum Bestromen der Netzeingangsdrossel dient.

Nach einer vorteilhaften Ausgestaltung solcher Schaltungsanordnungen nach der Erfindung sind als Schaltmittel zum periodischen Trennen des Spannungszwischenkreises vom Eingangsstromrichter jeweilige IGBT-Transistoren mit jeweiliger Freilaufdiode in den Zuleitungen zwischen Eingangsstromrichter und Spannungszwischenkreis vorgesehen, wobei die Freilaufdioden antiparallel angeordnet sind.

Solange solche ausgeprägten Resonanzstellen des Motors weit oberhalb möglicher Systemschwingungen des Umrichtersystems liegen, ist die Gefahr von Resonanzüberhöhungen im Motorsternpunkt gering. Dies ändert sich jedoch, je näher solche Resonanzfrequenzen im Frequenzgang eines Motors gegen Erdpotential in den Bereich von solchen Systemschwingungen des Umrichtersystems gelangen. Dies geschieht in erster Linie durch die Baugröße des Motors selbst. Die Größe eines Motors bedingt die Nutfläche, welche sich ihrerseits auf die Kapazität $C_M$ des Motors gegen Erdpotential auswirkt, indem diese Ableitkapazität mit der Größe der Nutfläche zunimmt. Mit zunehmender Ableitkapazität $C_M$ des Motors wiederum sinkt die ausgeprägte Resonanzfrequenz $f_{res}$ des Amplituden-Frequenzgangs des Motors gegen Erdpotential und kommt somit näher in den Bereich von unerwünschten Systemeigenfrequenzen $f_{sys}$ des Umrichtersystems. Dies hat zur Folge, dass mit zunehmender geometrischer Abmessung des Motors, z.B. der Baulänge oder dem Durchmesser, ausgeprägte Resonanzfrequenzen näher an diesen kritischen Bereich kommen und das Problem von Resonanzüberhöhungen zunimmt.

Dem wirkt die vorliegende Erfindung mit den voranstehend beschriebenen Maßnahmen wirksam und effektiv entgegen, indem ein Weg geschaffen wird, um der Entstehung solcher unerwünschten Systemeigenschwingungen $f_{sys}$ vorzubeugen. Mit der Erfindung wird dadurch eine erhebliche Beruhigung des Umrichtersystems gegen Erdpotential PE erreicht, weil das Potenzial des Zwischenkreises nicht mehr stark und periodisch gegen Erde verrissen wird.

Weitere Details und Vorteile der Erfindung ergeben sich anhand der folgenden Darstellung eines vorteilhaften Ausführungsbeispiels und in Verbindung mit den weiteren Figuren. Dabei sind Elemente mit gleicher Funktionalität mit den gleichen Bezugszeichen gekennzeichnet. Es zeigt in Prinzipdarstellung:

FIG 1       ein Blockschaltbild eines Umrichtersystems mit Drehstrommotor an einem Umrichter mit Spannungszwischenkreis und einem geregelten Eingangsstromrichter sowie Netzeingangsdrossel im Hochsetzstellerbetrieb,

FIG 2       ein Ersatzschaltbild des durch die in FIG 1 gezeigte Anordnung eines Umrichtersystems gebildeten passiven Kreises im Hinblick auf Systemschwingungen,

FIG 3       eine Prinzipskizze einer in einem Motor gebildeten Kettenleiterstruktur,

FIG 4       eine Prinzipskizze zur systemtheoretischen Darstellung des Wirkungspfades der Spannungen gegen Erdpotential vom Netz bis zum Motorsternpunkt,

FIG 5       eine schematische Blockdarstellung einer Topologie in einem Umrichterverband,

FIG 6       eine Prinzipskizze einer symmetrischen Ansteuerung des Motors aus dem Spannungszwischenkreis anhand von zwei Phasen L1 und L2,

FIG 7       ein Zeitdiagramm des Spannungsverlaufs zwischen diesen beiden Phasen L1 und L2 in Gegenüberstellung zu den Schaltzuständen des Wechselrichters W,

FIG 8       ein Zeitdiagramm des Spannungsverlaufs der Phase L1 gegen Erde,

FIG 9       ein entsprechendes Zeitdiagramm des Spannungsverlaufs der Phase L2 gegen Erde,

FIG 10      eine Prinzipskizze einer asymmetrischen Ansteuerung des Motors aus dem Spannungszwischenkreis als Gleichtaktsystem zur Betrachtung Phase gegen Erde,

FIG 11      ein Zeitdiagramm des asymmetrischen Spannungsverlaufs der Phasen L1 und L2 gegen Erde,

FIG 12      ein entsprechendes Zeitdiagramm des Gleichanteils des asymmetrischen Spannungsverlaufs der Phasen L1 und L2 gegen Erde,

FIG 13      ein entsprechendes Zeitdiagramm des Wechselanteils des asymmetrischen Spannungsverlaufs der Phasen L1 und L2 gegen Erde,

FIG 14      einen Amplituden-Frequenzgang eines beliebigen Motors gegen Erde zur Darstellung der Übertragungsfunktion $H_2(s)$,

FIG 15      einen Amplituden-Frequenzgang eines Motors gegen Erde ohne Berücksichtigung der mit steigender Frequenz zunehmenden Eigendämpfung zur Darstellung der Übertragungsfunktion $H_2(s)$,

FIG 16      ein Blockschaltbild eines geregelten Eingangsstromrichters mit Netzeingangsdrosseln und abkoppelbarem Spannungszwischenkreis,

FIG 17      ein beispielhaftes Zeitdiagramm von erzeugten sinusbewerteten Pulsen des Eingangsstromrichters,

FIG 18      ein Zeitdiagramm der eingangsseitigen Phasenspannungen des Eingangsstromrichters gegen Erdpotential PE bei Blockstromregelung,

FIG 19      die zu FIG 18 zugehörigen Schaltzustände der Stromventile des Eingangsstromrichters,

FIG 20      der daraus resultierende Strom in der Netzeingangsdrossel,

FIG 21      das zugehörige Timing-Diagramm für eine erfindungsgemäße synchronisierte Abkopplung des Spannungszwischenkreises bei Blockstromregelung,

FIG 22      ein Zeitdiagramm der Schaltzustände des ersten Stromventile-Paares T1, T2 des Eingangsstromrichters bei Sinusstromregelung,

FIG 23      ein entsprechendes Zeitdiagramm der Schaltzustände des zweiten Stromventile-Paares T3, T4 des Eingangs-

FIG 24    ein entsprechendes Zeitdiagramm der Schaltzustände des dritten Stromventile-Paares T5, T6 des Eingangsstromrichters bei Sinusstromregelung,

FIG 25    das zugehörige Timing-Diagramm für eine erfindungsgemäße synchronisierte Abkopplung des Spannungszwischenkreises bei Sinusstromregelung und

FIG 26    ein Blockschaltbild einer vorteilhaften Realisierung eines erfindungsgemäßen Eingangsstromrichters.

Die FIG 1 bis FIG 3 wurden bereits eingangs zur besseren Verständlichkeit der der Erfindung zugrunde liegenden Problematik erläutert, wobei an dieser Stelle noch einmal darauf hingewiesen sein soll, dass bereits das Erkennen der Problematik der Systemschwingungen eines Umrichterssystems nach FIG 1, vor allem mit Netzeingangsdrossel $L_K$ im Hochsetzstellerbetrieb in Verbindung mit einem Motor mit Kettenleiterstruktur K, und deren Ursache aus dem Stand der Technik nicht bekannt sind. Bereits darin ist somit eine erhebliche Leistung der vorliegenden Erfindung zu sehen.

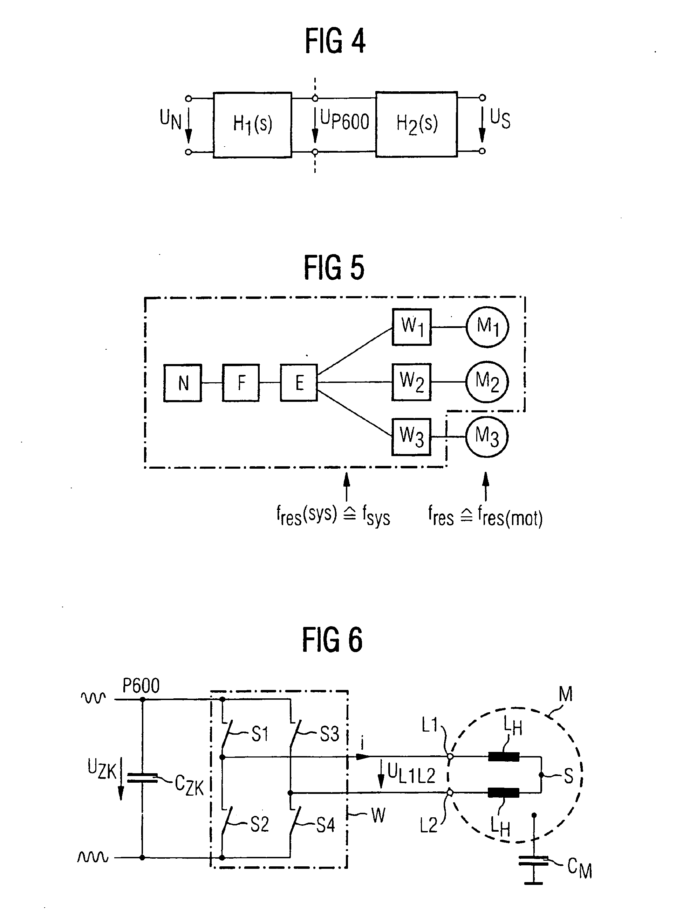

Zunächst soll ein solches in FIG 1 gezeigtes Umrichtersystem systemtheoretisch im Hinblick auf einen Wirkungspfad vom Netz bis zum Motorsternpunkt betrachtet werden. Dazu zeigt FIG 4 eine entsprechende Prinzipskizze mit der eingangsseitigen Netzspannung $U_N$ gegen Erde, die über den Umrichterverband mit einer ersten Übertragungsfunktion $H_1(s)$ in die Spannung $U_{P600}$ der positiven Zwischenkreisschiene gegen Erde umgesetzt wird. Im Motor wird diese Spannung $U_{P600}$ über eine zweite Übertragungsfunktion $H_2(s)$ in eine am Motorsternpunkt S anstehende Spannung $U_S$ gegen Erde umgesetzt.

Dabei ist zu berücksichtigen, dass in der Praxis häufig mehrere Motoren an einem Umrichterverband betrieben werden, indem mehrere Wechselrichter $W_1$ bis $W_3$ mit angeschlossenen Motoren $M_1$ bis $M_3$ aus der Zwischenkreisspannung $U_{ZK}$ gespeist werden. Die Darstellung nach FIG 5 zeigt ein Beispiel einer Topologie eines solchen Umrichterverbands. Aus dem Netz N wird über die Filteranordnung F der Eingangsstromrichter E gespeist, welcher mehrere Wechselrichter $W_1$ bis $W_3$ mit angeschlossenen Motoren $M_1$ bis $M_3$ aus der Zwischenkreisspannung $U_{ZK}$ speist.

Zwischen den jeweiligen Wechselrichtern $W_1$ bis $W_3$ an den angeschlossenen Motoren $M_1$ bis $M_3$ ist hinsichtlich der Systemschwingungen zu berücksichtigen, dass auf Seiten des Umrichterverbands mit N, F, E, $W_1$ bis $W_3$ als Systemeigenfrequenz $f_{sys}$ vorliegt, welche die Resonanzfrequenz $f_{res}(sys)$ des Systems beschreibt. Die Motoren $M_1$ bis $M_3$ hingegen weisen ihrerseits eine eigene Resonanzfrequenz $f_{res}$ auf, die der Eigenfrequenz $f_{res}(mot)$ des jeweiligen Motors entspricht.

Die in FIG 4 angestellte systemtheoretische Betrachtung erfolgt somit getrennt für den jeweiligen Motor, weshalb der Umrichterverband mit der Übertragungsfunktion $H_1(s)$ bei einer Topologie, wie in FIG 5 gezeigt, den Filter F, die Induktivität $L_K$, den Eingangsstromrichter E, alle Wechselrichter W, alle anderen Motoren M sowie alle Leitungen LT umfasst.

In einem solchen oder einem Umrichterverband allgemein kann sich, wie eingangs beschrieben, eine Systemschwingung ausbilden, die insbesondere durch das Takten einer Einspeisung E und in geringerem Maße auch durch das Takten der Wechselrichter W der Achsmodule angeregt wird. Dieses Takten bewirkt ein periodisches Umladen der parasitären Kapazitäten, die bereits anlässlich von FIG 1 beschrieben wurden.

Betrachtet man die Netzspannung $U_N$ als Eingangsgröße, dann wird diese mit der Übertragungsfunktion $H_1(s)$ auf die Ausgangsgröße $U_{P600}$ (bei Betrachtung der positiven Zwischenkreisschiene P600) abgebildet. Die Spannung $U_{P600}$ liegt, bis auf 600V Gleichanteile, gleichtaktig an den Motorklemmen an, was einem asymmetrischen System bzw. Nullsystem entspricht.

Die Motorleitung LT kann theoretisch sowohl $H_1(s)$ als auch $H_2(s)$ zugeordnet werden. Qualitativ gelten die Aussagen für beide Fälle. Hier soll die Motorleitung LT - wie erwähnt - zu $H_1(s)$ gehören. Im betrachteten Frequenzbereich ist die Leitung LT als elektrisch kurz anzusehen.

Wie bereits geschildert, hat der dadurch gebildete und in FIG 2 gezeigte passive Kreis eine natürliche Resonanzfrequenz $f_{res}(sys)$ bzw. $f_{sys}$, auf die sich dieses System einschwingt. Als Folge bekommen die Potenziale der Zwischenkreisschienen P600 und M600 zusätzlich zu den betriebsbedingten Verschiebungen mit beispielsweise 600 V Amplitude eine zusätzliche unerwünschte Schwingung mit einer Amplitude von bis zu einigen hundert Volt aufmoduliert.

Dies hat zur Folge, dass die Ausgangsspannungen des Wechselrichters W gegen Erde nicht mehr blockförmig sind, wie dies zwischen zwei Phasen U, V, W der Fall ist, sondern die Ausgangsspannungen stellen Ausschnitte aus den Systemschwingungen auf die Zwischenkreisschienen P600 und M600 dar.

Dies lässt sich am besten veranschaulichen, wenn man die in FIG 6 gezeigte Prinzipskizze einer symmetrischen Ansteuerung des Motors M aus dem Spannungszwischenkreis $C_{ZK}$ anhand von zwei beispielhaften Phasen L1 und L2 zugrunde legt. Es ist der Zwischenkreis mit der Zwischenkreiskapazität $C_{ZK}$ und den Zwischenkreisschienen P600 und M600 gezeigt, aus dem über einen vereinfachten Wechselrichter in Brückenschaltung mit den Schaltern S1 bis S4 eine Spannung $U_{L1L2}$ bzw. ein Strom i zur Speisung zweier im Motorsternpunkt S verbundener Stränge L1 und L2 des Motors M mit jeweiligen Induktivitäten $L_H$ erfolgt. Der Motor weist die bereits erläuterte Ableitkapazität $C_M$ gegen Erdpotenzial auf.

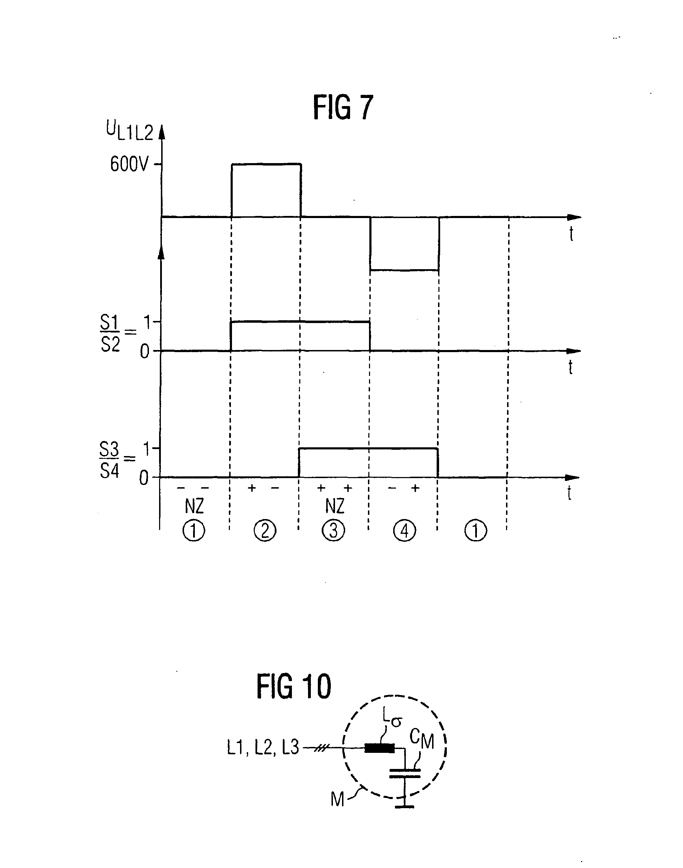

Die Darstellung nach FIG 7 zeigt den Verlauf der Spannung $U_{L1L2}$ zwischen den Phasen L1 und L2 über die Zeit t gegenübergestellt mit den jeweiligen Schaltzuständen der Schalter S1 bis S4 der Brücke des Wechselrichters W, welche darunter ebenfalls über die Zeit t aufgetragen sind. Die Schalter S1 und S2 stellen den ersten Brückenzweig, die Schalter S3 und S4 den zweiten Brückenzweig dar. Dabei sind Schalter einer Phase immer invers zueinander, da andernfalls der Zwischenkreis kurzgeschlossen würde.

Zur Veranschaulichung der Schaltzustände der beiden Brückenzweige S1/S2 und S3/S4 sind die vier Zustände 1, 2, 3 und 4 angenommen. Im Zustand 1 gilt S1=0, S2=1 und S3=0, S4=1 mit dem Zustand ‚--' für die Phasen L1 und L2. In diesem Fall werden also sogenannte Nullzeiger NZ geschaltet und zwischen den Phasen L1 und L2 liegt keine Spannung $U_{L1L2}$ an.

Im Zustand 2 gilt S1=1, S2=0 und S3=0, S4=1. Daraus resultiert der Zustand '+-' mit einer Spannung $U_{L1L2}$ von 600V zwischen den Phasen L1 und L2.

Im Zustand 3 gilt S1=1, S2=0 und S3=1, S4=0. Daraus resultiert der Zustand '++', es werden also wiederum sogenannte Nullzeiger NZ geschaltet und zwischen den Phasen L1 und L2 liegt keine Spannung $U_{L1L2}$ an.

Im Zustand 4 schließlich gilt S1=0, S2=1 und S3=1, S4=0. Daraus resultiert der Zustand ‚-+' mit einer Spannung $U_{L1L2}$ von - 600V zwischen den Phasen L1 und L2. Anschließend beginnt eine neuer Zustand 1 usw..

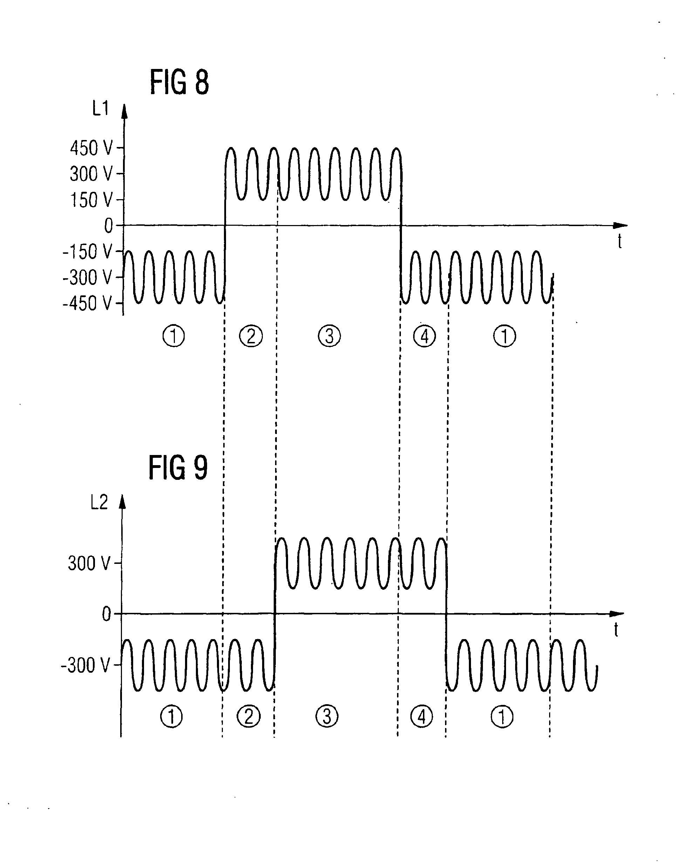

In der Darstellung nach FIG 8 ist ebenfalls für diese Zustände 1 bis 4 der Verlauf der Spannung an der Phase L1 gegen Erde über die Zeit t gezeigt, also asymmetrisch betrachtet. Dabei ist das vorangehend geschilderte Phänomen zu erkennen, wonach der Spannungsverlauf nicht ideal blockförmig ist, sondern die unerwünschten Systemschwingungen des Umrichtersystems aus FIG 1 bzw. FIG 4 mit einer beispielhaften Amplitude von ca. 150V aufmoduliert sind. Das gleiche gilt u.U. mit einer konstanten Amplitudenverschiebung für den asymmetrischen Spannungsverlauf der Phase L2 gegen Erde, der in FIG 9 gezeigt ist. Man erkennt, dass beide Phasen L1 und L2 und damit auch die Zwischenkreisschienen P600 und M600 gleichtaktig schwingen. D.h. diese werden stets "parallel" verschoben, also ohne eine Phasenverschiebung.

Daran wird deutlich, dass das Problem möglicher Resonanzüberhöhungen im wesentlichen durch asymmetrische Ströme i hervorgerufen wird. Aus diesem Grund lohnt sich die Betrachtung der Anordnung als Gleichtaktsystem, wie diese ausschnittsweise in FIG 10 in Form einer Prinzipskizze einer asymmetrischen Ansteuerung des Motors M aus dem Spannungszwischenkreis $C_{ZK}$ gezeigt ist. Dabei wird somit davon ausgegangen, dass alle Motorphasen U, V, W bzw. L1 bis L3 eine durch die Motorwicklung bedingte Induktivität $L_\sigma$ bilden, die durch die Ableitkapazität $C_M$ gegen Erde abgeschlossen wird.

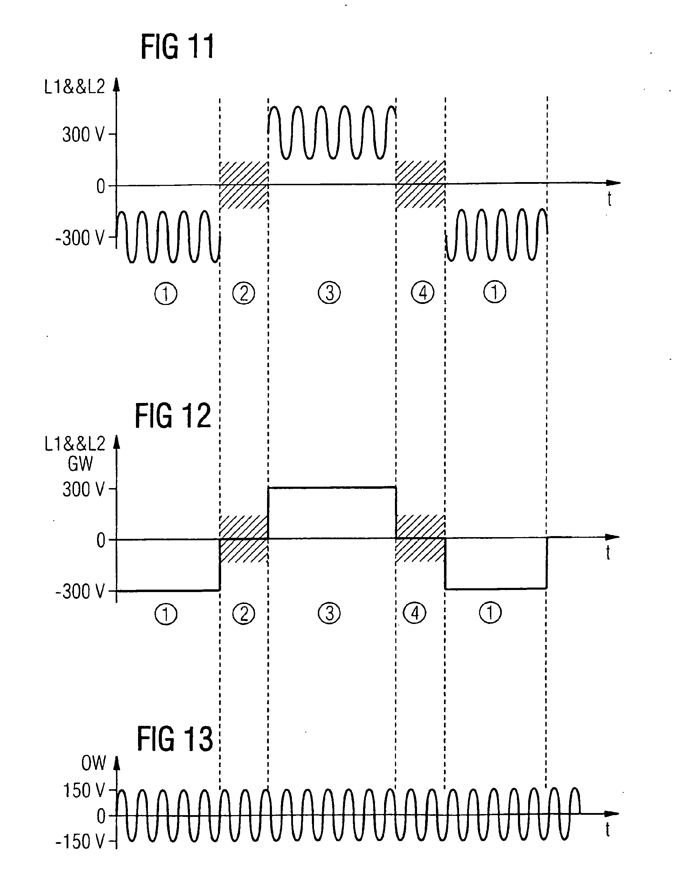

Betrachtet man nun wiederum die beiden Phasen L1 und L2, nunmehr jedoch gemeinsam im Gleichtaktsystem (im folgenden mit L1&&L2 gekennzeichnet), so ergibt sich der in FIG 11 gezeigte Verlauf der Spannung gegen Erde. Aus der aus FIG 6 und FIG 7 erkennbaren "parallelen" Verschiebung der einzelnen Phasen L1, L2 kann im Gleichtaktsystem für L1&&L2 in den Zuständen 2 und 4 kein Gleichtaktsignal skizziert werden, weil hier die Phasen L1 und L2 auf unterschiedlichem Potential liegen (im skizzierten Fall beträgt der Abstand eine Gleichspannung von 600 Volt). Weil nur zwei Phasen betrachtet werden, liegen diese im Mittel gleichtaktig bei 0 Volt. In den übrigen Zuständen 1 und 3 entspricht der Spannungsverlauf von L1&&L2 dem von L1 in FIG 8 und L2 in FIG 9.

Der in FIG 11 gezeigte Spannungsverlauf von L1&&L2 im Gleichtaktsystem lässt sich dabei in eine Grundwelle GW und eine Oberwelle OW trennen. Diese sind getrennt in FIG 12 und FIG 13 gezeigt.

Aus der Darstellung nach FIG 12 ist der Spannungsverlauf der Grundwelle GW zu entnehmen. Dabei wird deutlich, dass dieser die gewünschten blockförmigen Schaltzustände beschreibt mit -300V in Zustand 1, 0V in den Zuständen 2 und 4 aufgrund der "parallelen" Verschiebung und +300V im Zustand 3. Die in FIG 13 gezeigte Oberwelle OW des Spannungsverlaufs L1&&L2 beschreibt einen im wesentlichen konstanten sinusförmigen Verlauf mit einer Amplitude von beispielhaft 150 V.

Die Oberwelle bzw. Systemschwingung liegt somit in allen Zuständen 1 bis 4 am Motor M an, wodurch dieser Phase-Erde-Schwingkreis, wie in FIG 2 gezeigt, im Motor M ständig angeregt wird. Wenn diese Systemschwingung nun in der Nähe einer Motoreigenfrequenz liegt bzw. der Motor M eine ausgeprägte Resonanz in der Nähe der Frequenz der Systemschwingung aufweist, kann es zu unerwünschten Resonanzüberhöhungen kommen. Ein "maximales" Aufschwingen dieses Phase-Erde-Schwingkreises wird in der Regel lediglich durch die Brüche in der Oberwelle aufgrund des Schaltens von einem Zustand in den nächsten verhindert.

Im Hinblick auf die vorangehend erwähnte systemtheoretische Betrachtung der Problematik nach FIG 4 hängt die Amplitude einer solchen Systemschwingung $f_{sys}$ dabei im wesentlichen von zwei Faktoren ab. Dies ist zum einen die intrinsische Dämpfung im System, die umgekehrt proportional zur Güte des Schwingkreises ist, wobei die Dämpfung mit steigender Frequenz zunimmt. Zum anderen ist es die Anregung, d.h. die Art der Einspeisung (z.B. Diodeneinspeisung oder geregelte Einspeisung) und die Höhe der Zwischenkreisspannung $U_{ZK}$.

Besonders ausgeprägte Systemeigenschwingungen lassen sich damit bei Umrichtersystemen beobachten, die viele Achsmodule W und Motoren M sowie lange Motorleitungen LT haben.

Der Frequenzbereich der Systemeigenschwingungen $f_{sys}$ reicht dabei in der Regel von ca. 10 kHz für große Umrichtersysteme bis über 50kHz für kleinere Umrichtersysteme.

Amplitude und Frequenz hängen somit von der Konfiguration und dem Ausbaugrad des Systems ab, z.B.:

- Art der Einspeisung E (geregelt oder ungeregelt)
- Anzahl der Achsen bzw. Motoren M, die an einem Umrichtersystem UR betrieben werden
- Länge der Leistungsleitungen LT

Es bleibt somit an dieser Stelle festzuhalten, dass Umrichtersysteme mit Spannungszwischenkreis Eigenschwingungen der Zwischenkreisschienen P600, M600 gegen Erde aufweisen können. Diese sind besonders ausgeprägt bei mehrachsigen Systemen und bei geregelten Netzeinspeisungen im Eingangsstromrichter E, vor allem im Hochsetzstellerbetrieb. Damit wird der Motor M im asymmetrischen System unabhängig von den Pulsmustern der einzelnen Phasen U, V, W bzw. L1 bis L3 nahezu monofrequent angeregt. Mit der Übertragungsfunktion $H_2(s)$ wird diese Anregung auf die Ausgangsseite, nämlich die Spannung $U_S$ am Sternpunkt S gegen Erde, abgebildet.

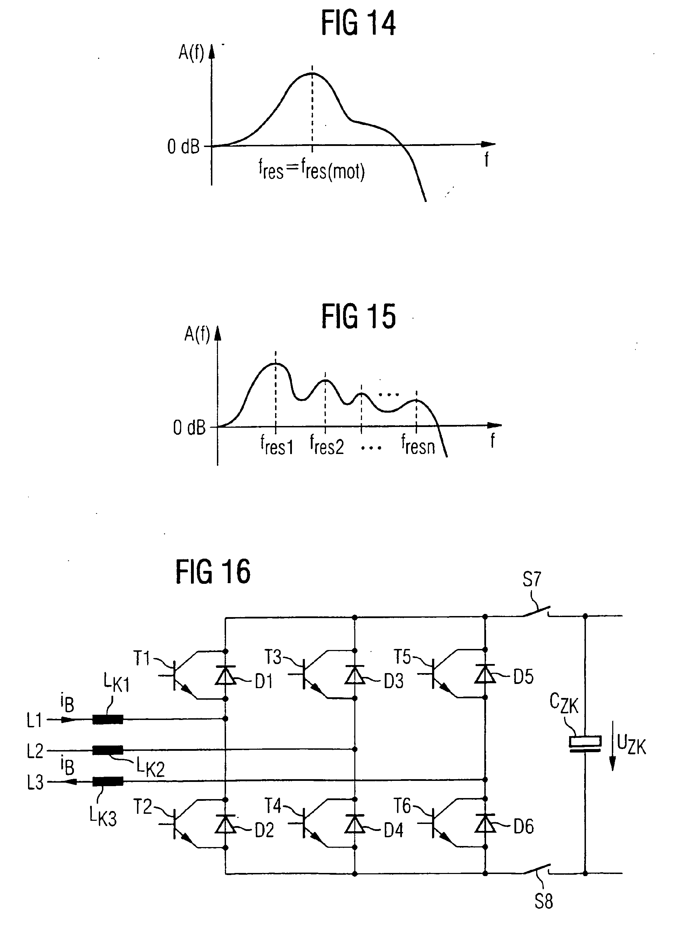

Alle elektrischen Motoren M, gleich welcher Bauform, haben qualitativ den in der Darstellung nach FIG 14 gezeigten Amplituden-Frequenzgang A(f) ihrer Übertragungsfunktion $H_2(s)$ gegen Erde. Dieser weist eine ausgeprägte Resonanzfrequenz $f_{res}(mot)$ bzw. $f_{res}$ auf. Die Übertragungsfunktion $H_2(s)$ kann dabei beschrieben werden als:

$$H_2(s) = U_{P600} / U_S \quad .$$

Die Frequenz der ausgeprägten Resonanzüberhöhung des Motors hängt von den induktiven und kapazitiven Elementen im Motor gegen Erde ab und bestimmt sich damit nach:

$$f_{res} \propto \frac{1}{\sqrt{L_M \cdot C_M}}$$

mit $L_M = f(L_{PE})$ als wirksamer Induktivität und $C_M = f(C_{PE})$ als wirksamer Kapazität des Motors M gegen Erdpotential PE bzw. im Nullsystem. Die genauen Funktionen hängen dabei vom jeweiligen Messverfahren und den verwendeten Ersatzschaltbildern ab.

Bei mehreren Sternpunkten S liegt eine Parallelschaltung identischer Schwingkreise vor. Die Kapazität pro Schwingkreis bestimmt sich dabei nach:

$$f_{res} \propto \frac{1}{\sqrt{L_M \cdot C_M}}$$

Die Induktivität hängt von der Anzahl der in Reihe geschalteten Spulen ab, wobei vor allem in der Polspultechnik mehrere Sternpunkte S vorkommen. Da die einzelnen Spulen als magnetisch voneinander entkoppelt angesehen werden können, gilt ferner:

$$\tilde{L} \propto \frac{n_{1S}}{Anz_S}$$

mit $n_{1S}$ als Anzahl der Spulenbaugruppen bei einem Sternpunkt S und $Anz_S$ der Anzahl der Sternpunkte S.

Damit gilt für Motoren gleicher Baugröße, aber unterschiedlicher Verschaltung identischer Spulengruppen:

$$f_{res} \propto \frac{1}{\sqrt{\dfrac{1}{Anz_S} \cdot \dfrac{1}{Anz_S}}} \propto Anz_S \quad .$$

Der Einfluss der Motorgröße auf die Resonanzfrequenz $f_{res}$ kann folgendermaßen abgeschätzt werden:

$$C = \frac{\varepsilon \cdot A}{d}$$

mit

$$A \propto \textit{Nutfläche} \propto D \cdot LG \quad ,$$

wobei D den Durchmesser und LG die Länge des Motors darstellen.

Damit gilt für den Einfluss der Motorgröße bei ansonsten konstanten Eigenschaften:

$$f_{res} \propto \frac{1}{\sqrt{\textit{Nutfläche}}} \propto \frac{1}{\sqrt{D \cdot LG}} \quad .$$

Ohne Berücksichtigung der mit steigender Frequenz f zunehmenden Eigendämpfung aufgrund von Wirbelstromverlusten, Ummagnetisierungen etc. und insbesondere, wenn der Motor M als Kettenleiter K verstanden wird, was vor allem bei Motoren in Polspultechnologie aufgrund der in Reihe geschalteten Spulengruppen makroskopisch plausibel erscheint, ergibt sich der in FIG 15 gezeigte Amplituden-Frequenzgang A(f). Dieser weist mehrere lokale Maxima auf, welche mehrere Resonanzfrequenzen $f_{res\,1}$ bis $f_{res\,n}$ beschreiben, wobei die erste Resonanzüberhöhung $f_{res\,1}$, die bei der niedrigsten Frequenz liegt, dominant ist und damit die bestimmende bzw. ausgeprägte Resonanzfrequenz $f_{res}$ darstellt.

Es existieren somit Frequenzen, bei denen am Motorsternpunkt S wesentlich höhere Spannungen auftreten als an den Eingangsklemmen des Motors M, die beispielsweise um den Faktor 3 bis 4 höher liegen. Dabei ist festzustellen, dass die Resonanzüberhöhung umso höher ist, je niedriger $f_{res}$ liegt. Besonders gefährdet sind somit geometrisch große Torquemotoren, bei denen sich über die Nutfläche und mehrere Sternpunkte S besonders leicht Resonanzstellen $f_{res}$ bilden lassen, die in der Nähe oder genau auf der Frequenz $f_{sys}$ der Systemeigenschwingungen liegen.

Die Darstellung nach FIG 16 zeigt nun ein Blockschaltbild eines geregelten Eingangsstromrichters mit Netzeingangsdrosseln $L_{K1}$ bis $L_{K3}$ für die drei Phasen L1 bis L3. Die Ansteuerung erfolgt über jeweilige IGBT-Transistoren T1 bis T6 mit jeweiliger Freilaufdiode D1 bis D6 als Stromventile, die in einer Drehstrom-Brückenschaltung angeordnet sind. In der positiven und der negativen Zwischenkreisschiene P600 und M600 ist jeweils ein Schalter S7 und S8 zum Abkoppeln des Spannungszwischenkreises mit der Zwischenkreiskapazität $C_{ZK}$ vorgesehen.

Bei der Art der Steuerung der Stromventile T1 bis T6 kann dabei zwischen mehreren Einspeiseregelungsprinzipien unterschieden werden. Bei der sog. Blockstromregelung zum einen handelt es sich um ein klassisches Hochsetzstellerprinzip, bei dem immer genau 2 Phasen von L1 bis L3 des Netzes N kurzgeschlossen werden und die verbleibende dritte Phase gesperrt wird. Nach dem Bestromen der jeweiligen Speicherdrossel $L_{K1}$ bis $L_{K3}$ wird diese mit dem Zwischenkreis verbunden und treibt den Strom entgegen der größeren Spannung in den Kondensator $C_{ZK}$.

Um die Netzrückwirkungen aufgrund der Stromform zu reduzieren, werden Regelungsverfahren eingesetzt, bei denen dem Netz N sinusförmige Ströme entnommen werden. Dabei wird der Strom entweder genau in Phase mit der Netzspannung geregelt, um nur Wirkleistung aus dem Netz zu entnehmen, oder es wird eine bestimmte Phasenverschiebung zwischen Strom und Spannung eingestellt, um auch die mit dem Netz ausgetauschte Blindleistung zu beeinflussen.

Bei der sog. Sinusstromregelung zum handelt es sich um eine dreiphasige Stromregelung der Netzphasen L1 bis L3. Dies kann als eine Umkehrung eines Ausgangswechselrichters W verstanden werden. Das Netzspannungssystem N entspricht dabei der EMK eines Synchronmotors mit konstanter Drehfrequenz von 50 Hz. Die Netzströme bestimmen das "Drehmoment", das letztlich über die Richtung des Leistungsflusses und seine Größe entscheidet. Die Sinusstromregelung ist die analoge Realisierung einer einfachen Raumzeigermodulation. Anders als beim Blockstrombetrieb, wo unbewertete Pulse bzw. Blöcke um 120° phasenversetzt generiert werden, werden beim Sinusstrombetrieb solche Pulse bzw. Blöcke sinusbewertet.

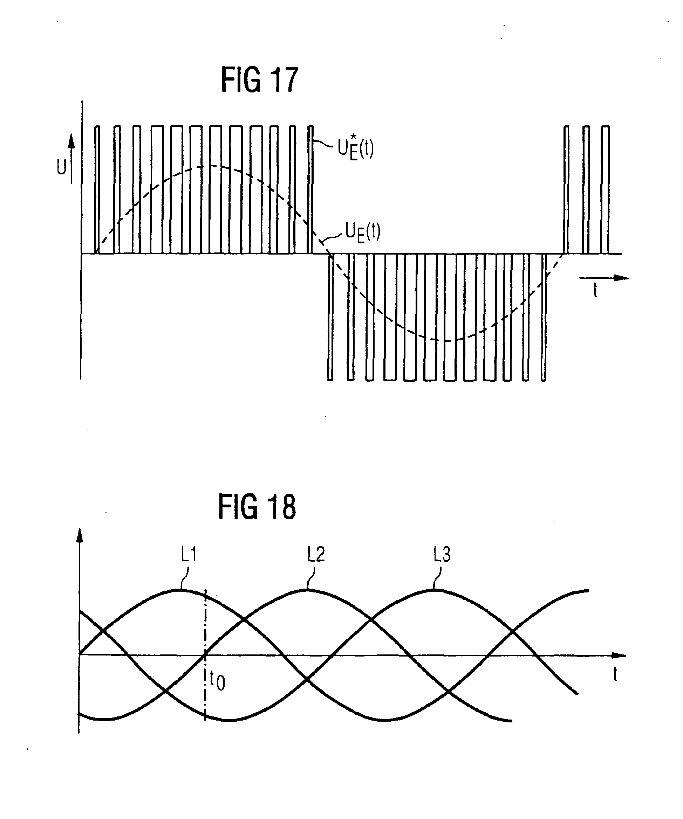

Der daraus resultierende Verlauf ist in der Darstellung gemäß FIG 17 gezeigt, wo ein Zeitdiagramm der erzeugten sinusbewerteten Pulse des Eingangsstromrichters vereinfacht anhand einer Wechselstromschaltung abgebildet ist. Der Grundschwingung der Eingangsstromrichtereingangsspannung $U_E(t)$ ist das entsprechende sinusbewertete Pulsmuster $U_E{}^*(t)$ gegenübergestellt. Dabei lässt sich erkennen, dass mit zunehmender Amplitude von $U_E(t)$ die Breite der generierten Pulse ebenfalls zunimmt und umgekehrt.

Das voranstehend erläuterte Problem der Erfindung ist somit eine grundsätzliche Eigenschaft von geregelten Einspeisungen, die nach den beschriebenen Prinzipien arbeiten.

Zum besseren Verständnis soll das Prinzip der vorliegenden Erfindung nun anhand einer Blockstromregelung näher beschrieben werden. Dazu zeigt FIG 18 den an den einzelnen Phasen L1 bis L3 und damit eingangsseitig am Eingangsstromrichter E anliegenden sinusförmigen Spannungsverlauf gegen Erdpotential PE, wobei jede Phase zu den beiden anderen um +/- 120° phasenverschoben ist. Als Startzeitpunkt für die Erläuterung ist ein beispielhafter Zeitpunkt t0 markiert.

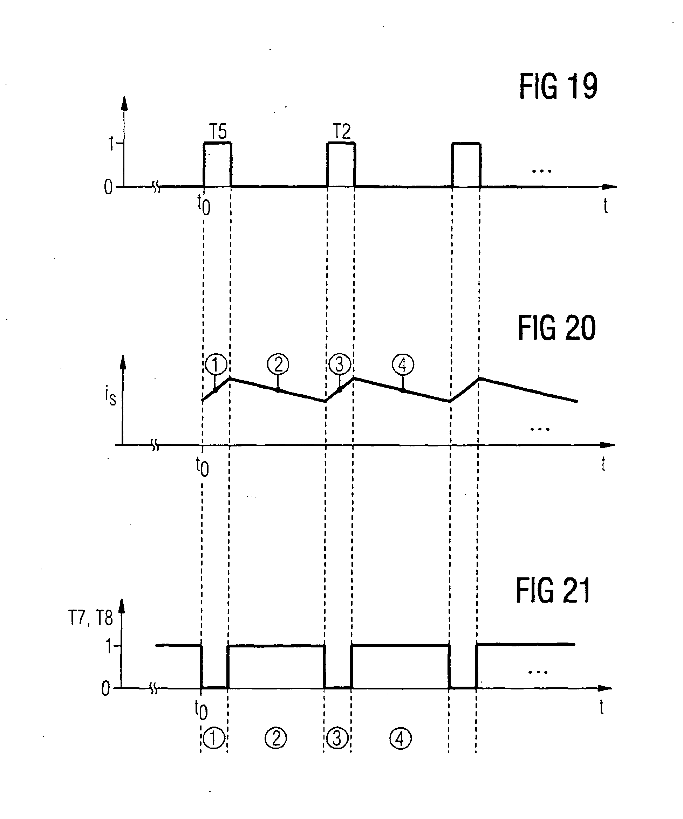

In den FIG 19 bis 21 sind nun jeweils ausgehend von diesem Startzeitpunkt t0 als kleiner Ausschnitt im Vergleich zu FIG 18 die ersten beiden Schaltzustände der Transistoren T2, T5 des Eingangsstromrichters E (FIG 19), der Verlauf des daraus resultierenden Stromes $i_B$ in den jeweiligen Netzeingangsdrosseln $L_{K1}$ und $L_{K3}$, hier für $L_{K1}$, (FIG 20) sowie das zugehörige Timing-Diagramm der Schalter S7, S8 für eine erfindungsgemäße synchronisierte Abkopplung des Spannungszwischenkreises bei Blockstromregelung (FIG 21) gezeigt.

Wie aus der FIG 18 ersichtlich ist, hat die Phase L2 im Zeitpunkt t0 einen Nulldurchgang und ist somit stromlos. Ein Strom $i_B$ fließt hingegen in der Phase L1 vom Netz N durch die Drossel $L_{K1}$ zum Eingangsstromrichter E, was auch aus dem positiven Spannungsverlauf von L1 im Zeitpunkt t0 ersichtlich ist. Durch die Drossel $L_{K3}$ in der Phase L3 fließt entsprechend der Strom $i_B$ zurück, erkennbar auch aus dem negativen Spannungswert in der Phase L3 zum Zeitpunkt t0.

Damit dieser Strom fließen kann, ist der Transistor T5 in dieser Schaltphase 1 eingeschaltet, erkennbar aus dem PWM-Diagramm nach FIG 19. Entsprechend fließt der Strom $i_B$ somit über die Freilaufdiode D1 und den Transistor T5 zurück ins Netz N. Wie die FIG 20 zeigt, wird in dieser Schaltphase 1 die Netzeingangsdrossel $L_{K1}$ bestromt und somit mit magnetischer Feldenergie geladen, $i_B$ nimmt zu. Die Schalter S7 und S8 sind in dieser Phase 1 geöffnet, der Spannungszwischenkreis ist somit abgekoppelt.

In der Schaltphase 2 wird der Transistor T5 wieder geschlossen und der Zwischenkreis wird über die beiden Schalter S7, S8 wieder angekoppelt. Der Strom $i_B$ fließt nun über die Freilaufdiode D1, über die positive Zwischenkreisschiene P600 und den geschlossenen Schalter S7, über die Zwischenkreiskapazität $C_{ZK}$, über die negative Zwischenkreisschiene M600 und den geschlossenen Schalter S8 sowie über die Freilaufdiode D6. Die Netzeingangsdrossel $L_{K1}$ wird somit entladen, indem sie den Strom in die Zwischenkreiskapazität $C_{ZK}$ treibt und diese damit auflädt. Dies entspricht dem Prinzip des Hochsetzstellerbetriebs.

In der darauffolgenden gezeigten Schaltphase 3 wird nun zum erneuten Laden der Netzeingangsdrossel $L_{K1}$ der Transistor T2 geschlossen und daher erfindungsgemäß der Zwischenkreis erneut abgekoppelt durch Öffnen der Schalter S7 und S8. Der Strom $i_B$ fließt in dieser Konstellation über den Transistor T2 und die Freilaufdiode D6.

Es folgt die Schaltphase 4, in der die Netzeingangsdrossel $L_{K1}$ wieder entladen wird und den Strom $i_B$ in den Zwischenkreiskondensator $C_{ZK}$ treibt. Dazu wird der Transistor T2 wieder abgeschaltet und der Zwischenkreis über S7 und S8 angekoppelt. Der Strom $i_B$ fließt dann über die Freilaufdiode D1, den Schalter S7, die Zwischenkreiskapazität $C_{ZK}$, den Schalter S8 und die Freilaufdiode D6.

Dieses Prinzip der Synchronisierung von einem Steuersatz für die Transistoren T1 bis T6 und den Schaltzuständen der Schalter S7, S8 zum An-/Abkoppeln des Zwischenkreises lässt sich nun für die dem Fachmann bekannten weiteren Schaltphasen bei einer Blockstromregelung fortführen. Immer wenn die Speicherdrosseln $L_{K1}$ bis $L_{K3}$ bestromt werden, wird der Zwischenkreis vom versorgenden Netz, hier vom Eingangsstromrichter E selbst, getrennt. Die dritte Phase des Eingangsstromrichters E (im Beispiel ist dies die Phase L2) ist dabei gesperrt.

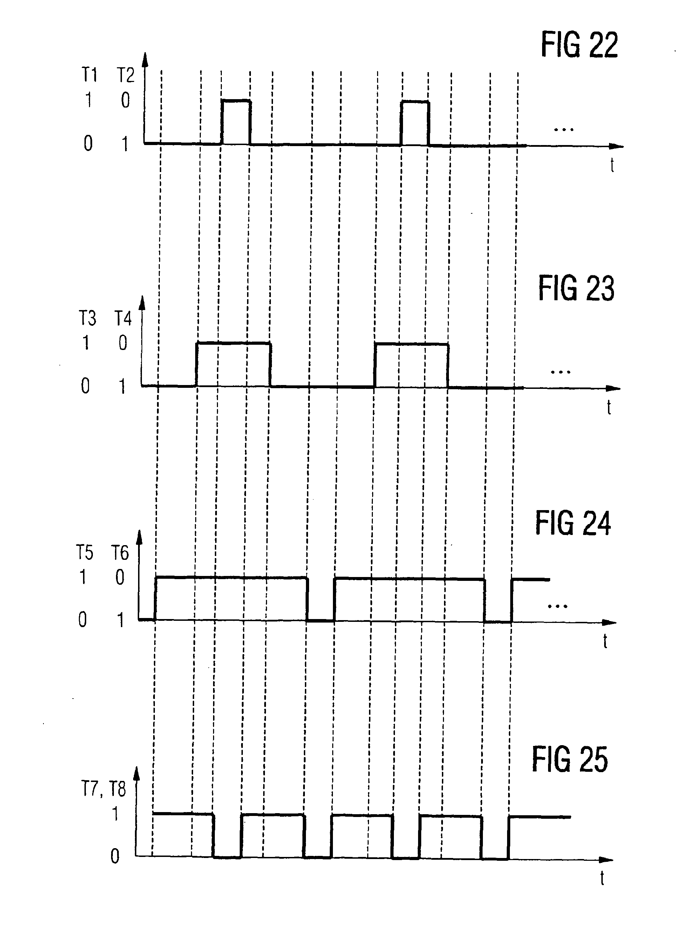

Die FIG 22 bis 25 veranschaulichen das Prinzip der Erfindung für einen Betrieb mit Sinusstromregelung. Aufgrund der dabei erfolgenden dreiphasigen Stromregelung im Eingangsstromrichter E sind die Schaltzustände der jeweiligen Stromventilpaare der Drehstrombrückenschaltung gezeigt. Die FIG 22 zeigt dazu das Transistorpaar T1 und T2, die FIG 23 das Transistorpaar T3 und T4 sowie die FIG 24 das Transistorpaar T5 und T6. Wie auch schon in FIG 19, sind jeweils EIN-/AUS-Zustände des Transistorpaares gezeigt, weil nie beide Transistoren geschlossen werden dürfen, was einen Kurzschluss des Zwischenkreises verursachen würde. Die Schaltzustände von Transistorpaaren T1, T2 und T3, T4 sowie T5, T6 sind dabei stets invers zueinander. EIN bzw. "1" bedeutet somit, dass ein Transistor eines Transistorpaares durchschaltet, während bei AUS bzw. "0" der andere geöffnet bleibt.

Mit den in den FIG 22 bis 24 gezeigten Schaltzuständen für die Drehstrombrückenanordnung gemäß FIG 16 im Eingangsstromrichter E lassen sich nun die sinusbewerteten Pulsmuster erzeugen, wie sie in FIG 17 dargestellt sind. Die FIG 25 stellt die dazugehörigen synchronisierten Schaltzustände für die Schalter S7, S8 zum An-/Abkoppeln des Zwischenkreises dar. EIN bzw. "1" bedeutet hier, dass beide Schalter S7 und S8 geschlossen sind. Daran ist erkennbar, dass immer dann, wenn der Eingangsstromrichter E Nullzeiger schaltet, also alle Transistorpaare durchgeschaltet +++ oder geöffnet --- sind, der Zwischenkreis abgekoppelt wird, indem die Schalter S7, S8 geöffnet werden. Eine solche Synchronisation kann auf einfache Weise durch eine Verkopplung der Ansteuersignale des Steuersatzes für die Transistoren T1 bis T6, z.B. über logische UND-Gatter, erfolgen. Diese Sinusstromregelung stellt eine einfache Raumzeigermodulation dar. Für eine allgemeine Raumzeigermodulation gilt ebenfalls, dass der Zwischenkreis abgekoppelt wird, während der Eingangsstromrichter E Nullzeiger schaltet. Dabei können die Zeiten, während derer der Zwischenkreis vom Netz getrennt bleibt, verlängert werden, allerdings auf Kosten der Kurvenform der Netzströme, die dann nicht mehr sinusförmig bleiben, sondern einen vergrößerten Oberwellenanteil aufweisen.

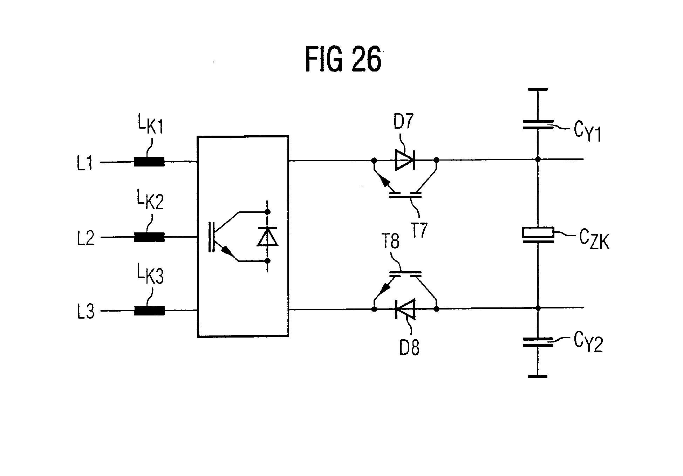

In der Darstellung nach FIG 26 ist eine weitere vorteilhafte Ausführungsform eines erfindungsgemäßen Eingangsstromrichters gezeigt. Dabei sind neben den Netzeingangsdrosseln $L_{K1}$ bis $L_{K3}$ und dem Eingangsstromrichter E als Schalter zum Abkoppeln des Zwischenkreises IGBT-Transistoren T7 für die positive Zwischenkreisschiene P600 und T8 für die negative Zwischenkreisschiene M600 vorgesehen. Jeder Transistor T7 und T8 weist vorzugsweise eine Freilaufdiode D7 und D8 auf, wobei die Transistoren derart angeordnet sind, dass die beiden Dioden D7 und D8 antiparallel geschaltet sind.

Wenn man sich die in den FIG 19 bis 21 gezeigte Schaltphase 1 beispielhaft vergegenwärtigt, so wird deutlich, dass die positive Zwischenkreisschiene P600 zwischen der Diode D1 und dem durchgeschalteten Transistor T5 (also vor einem Schalter T7 mit D7) etwa 0 Volt beträgt, weil die Phase L1 auf ca. +300 Volt und die Phase L3 auf ca. -300 Volt liegt. Auf Seite der Zwischenkreiskapazität $C_{ZK}$ bei P600 liegt hingegen ein Potential von etwa +300 Volt an. Dies hat zur Folge, dass in der Schaltphase 1 kein Strom über die Freilaufdiode D7 fließen kann, da diese in Sperrrichtung geschaltet ist. Die gleiche Logik gilt entsprechend für die anderen Schaltphasen.

Aufgrund des Abkoppelns des Zwischenkreises ist es zusätzlich möglich, über in der FIG 26 gezeigte Y-Kondensatoren CY1, CY2 bei P600 und M600 den Zwischenkreis wie bei ungeregelten Diodeneinspeisungen gegenüber dem Erdpotential zu symmetrieren.

Theoretisch ist auch eine Abkopplung des Zwischenkreises über nur einen Schalter S7 oder S8 bzw. T7, D7 und T8, D8 denkbar, jedoch werden mit einer zweiphasigen Abkopplung, wie in den FIG 16 und 26 gezeigt, bessere Ergebnisse erzielt. Mit der Erfindung lässt sich eine entscheidende Beruhigung des in FIG 1 gezeigten Umrichtersystems gegen Erde erreichen, weil bei einer Blockstromregelung das Potenzial des Zwischenkreises nicht mehr so stark periodisch gegen Erde verrissen wird und im Fall einer Sinusstromregelung oder Raumzeigermodulation die größten Anregungen während des Schaltens von Nullzeigern vermieden werden, so dass dann nur noch die weniger schlimmen geringen Anregungen bleiben.

**Patentansprüche**

1. Verfahren zur Verringerung von Systemeigenschwingungen ($f_{sys}$) gegen Erdpotential (PE) bei einem elektrischen Antrieb mit einem Spannungszwischenkreis-Umrichter (UR) mit gesteuertem Eingangsstromrichter (E) und mit eingangsseitiger Induktivität, insbesondere einer Netzeingangsdrossel ($L_K$), und mit daran angeschlossenem elektrischen Motor (M), insbesondere einem solchen in Polspultechnik, wobei der Spannungszwischenkreis ($U_{ZK}$) periodisch zu auf einen Steuersatz des Eingangsstromrichters (E) synchronisierten Zeitpunkten vom versorgenden Netz (N) getrennt wird.

2. Verfahren nach Anspruch 1, wobei der Eingangsstromrichter (E) im Blockstrombetrieb gesteuert wird und der Spannungszwischenkreis ($U_{ZK}$) stets vom Eingangsstromrichter (E) getrennt wird, solange die eingangsseitige Induktivität ($L_K$) bestromt wird.

3. Verfahren zum Betreiben eines Spannungszwischenkreis-Umrichters (UR) mit gesteuertem Eingangsstromrichter (E) und mit eingangsseitiger Netzeingangsdrossel ($L_K$) nach dem Hochsetzstellerprinzip, wobei der Spannungszwischenkreis ($U_{ZK}$) periodisch zu auf einen Steuersatz des Eingangsstromrichters (E) synchronisierten Zeitpunkten vom versorgenden Netz (N) getrennt wird.

4. Verfahren nach Anspruch 2, wobei der Eingangsstromrichter (E) im Blockstrombetrieb gesteuert wird und der Spannungszwischenkreis ($U_{ZK}$) stets vom Eingangsstromrichter (E) getrennt wird, solange die Netzeingangsdrossel ($L_K$) bestromt wird.

5. Verfahren nach Anspruch 1 oder 3, wobei der Eingangsstromrichter (E) mit einem sinusbewerteten Pulsmuster gesteuert wird und der Spannungszwischenkreis ($U_{ZK}$) stets vom Eingangsstromrichter (E) getrennt wird, solange dieser (E) Nullzeiger (NZ; +++, ---) schaltet.

6. Verfahren nach Anspruch 1 oder 3, wobei der Eingangsstromrichter (E) mit einer allgemeinen Raumzeigermodulation gesteuert wird und der Spannungszwischenkreis ($U_{ZK}$) stets vom Eingangsstromrichter (E) getrennt wird, solange dieser (E) Nullzeiger (NZ; +++, ---) schaltet.

7. Verfahren nach einem der Ansprüche 2 oder 4 bis 6, wobei der Spannungszwischenkreis ($U_{ZK}$) über Y-Kondensatoren ($C_{Y1}$, $C_{Y2}$) gegenüber Erdpotential (PE) symmetriert wird.

**8.** Verfahren nach einem der vorangehenden Ansprüche, wobei eine Trennung des Spannungszwischenkreises ($U_{ZK}$) vom Eingangsstromrichter (E) mittels schaltenden Leistungshalbleiterschaltern (T7, T8), insbesondere mit IGBT-Transistoren, erfolgt.

**9.** Verfahren nach einem der vorangehenden Ansprüche, wobei der Spannungszwischenkreis ($U_{ZK}$) zweiphasig vom Eingangsstromrichter (E) getrennt wird.

**10.** Elektrischer Antrieb mit einem Spannungszwischenkreis-Umrichter (UR) mit gesteuertem Eingangsstromrichter (E) und mit eingangsseitiger Induktivität, insbesondere einer Netzeingangsdrossel ($L_K$), und mit daran angeschlossenem elektrischen Motor (M), insbesondere einem Motor (M) in Polspultechnik, der mindestens ein Schaltmittel (S7, S8; T7, T8) zum periodischen Trennen des Spannungszwischenkreises ($U_{ZK}$) vom versorgenden Netz (N) aufweist.

**11.** Spannungszwischenkreis-Umrichter (UR) mit gesteuertem Eingangsstromrichter (E) und mit eingangsseitiger Netzeingangsdrossel ($L_K$) zum Betrieb nach dem Hochsetzstellerprinzip, der mindestens ein Schaltmittel (S7, S8; T7, T8) zum periodischen Trennen des Spannungszwischenkreises ($U_{ZK}$) vom versorgenden Netz (N) aufweist.

**12.** Vorrichtung nach Anspruch 10 oder 11, wobei jedes Schaltmittel (S7, S8; T7, T8) zum periodischen Trennen des Spannungszwischenkreises ($U_{ZK}$) vom Eingangsstromrichter (E) auf einen Steuersatz des Eingangsstromrichters (E) synchronisierbar ist.

**13.** Vorrichtung nach einem der vorangehenden Ansprüche 11 bis 12, wobei jedes Schaltmittel (S7, S8; T7, T8) zum synchronisierten Abkoppeln des Spannungszwischenkreises ($U_{ZK}$) vom Eingangsstromrichter (E) während geeigneter Zeitpunkte zum Bestromen der Netzeingangsdrossel ($L_K$) dient.

**14.** Vorrichtung nach einem der vorangehenden Ansprüche 10 bis 13, wobei als Schaltmittel (S7, S8) zum periodischen Trennen des Spannungszwischenkreises ($U_{ZK}$) vom Eingangsstromrichter (E) jeweilige IGBT-Transistoren (T7, T8) mit jeweiliger Freilaufdiode (D7, D8) in den Zuleitungen zwischen Eingangsstromrichter (E) und Spannungszwischenkreis ($U_{ZK}$) angeordnet sind, wobei die Dioden (D7, D8) antiparallel angeordnet sind.

**Claims**

**1.** Method for reducing natural system oscillations ($f_{sys}$) with respect to the ground potential (PE) in an electrical drive having a voltage intermediate-circuit converter (UR) with a controlled input converter (E) and with an input-side inductance, in particular a mains system input inductor ($L_K$) and having an electric motor (M) connected thereto, in particular such an electric motor using field coil technology with the voltage intermediate circuit ($U_{ZK}$) being periodically disconnected from the supply mains system (N) at times which are synchronized to triggering equipment for the input converter (E).

**2.** Method according to Claim 1, in which the input converter (E) is controlled in the square-wave current mode, and the voltage intermediate circuit ($U_{ZK}$) is always disconnected from the input converter (E) as long as current is flowing through the input-side inductance ($L_K$) .

**3.** Method for operating a voltage intermediate-circuit converter (UR) having a controlled input converter (E) and having an input-side mains system input inductor ($L_K$) on the basis of the step-controller principle, in which the voltage intermediate circuit ($U_{ZK}$) is periodically disconnected from the supply mains system (N) at times which are synchronized to triggering equipment for the input converter (E).

**4.** Method according to Claim 2, in which the input converter (E) is controlled in the square-wave current mode, and the voltage intermediate circuit ($U_{ZK}$) is always disconnected from the input converter (E) as long as current is flowing through the mains system input inductor ($L_K$).

**5.** Method according to Claim 1 or 3, in which the input converter (E) is controlled by a sine-weighted pulse pattern, and the voltage intermediate circuit ($U_{ZK}$) is always disconnected from the input converter (E) for as long as it (E) is switching the zero vector (NZ; +++, ---).

**6.** Method according to Claim 1 or 3, in which the input converter (E) is controlled by general space-vector modulation, and the voltage intermediate circuit ($U_{ZK}$) is always disconnected from the input converter (E) for as long as it (E) is switching the zero vector (NZ; +++, ---).

7. Method according to one of Claims 2 or 4 to 6, in which the voltage intermediate circuit ($U_{ZK}$) is balanced with respect to ground potential (PE) via Y capacitors ($C_{Y1}$, $C_{Y2}$) .

8. Method according to one of the preceding claims, in which the voltage intermediate circuit ($U_{ZK}$) is disconnected from the input converter (E) by means of switching power semiconductor switches (T7, T8), in particular using IGBT transistors.

9. Method according to one of the preceding claims, in which two phases of the voltage intermediate circuit ($U_{ZK}$) are disconnected from the input converter (E).

10. Electrical drive having a voltage intermediate-circuit converter (UR) with a controlled input converter (E) and with an input-side inductance, in particular a mains system input inductor ($L_K$), and having an electric motor (M) connected thereto, in particular a motor (M) using field coil technology, which has at least one switching means (S7, S8; T7, T8) for periodic disconnection of the voltage intermediate circuit ($U_{ZK}$) from the supply mains system (M).

11. Voltage intermediate-circuit converter (UR) with a controlled input converter (E) and with an input-side mains system input inductor ($L_K$) for operation on the step-up controller principle, which has at least one switching means (S7, S8; T7, T8) for periodic disconnection of the voltage intermediate circuit ($U_{ZK}$) from the supply mains system (N).

12. Apparatus according to Claim 10 or 11, in which each switching means (S7, S8; T7, T8) can be synchronized to triggering equipment for the input converter (E) for periodic disconnection of the voltage intermediate circuit ($U_{ZK}$) from the input converter (E).

13. Apparatus according to one of the preceding Claims 11 or 12, in which each switching means (S7, S8; T7, T8) is used for synchronized decoupling of the voltage intermediate circuit ($U_{ZK}$) from the input converter (E) during suitable times for current to flow to the mains system input inductor ($L_K$).

14. Apparatus according to one of the preceding Claims 10 to 13, in which IGBT transistors (T7, T8) with respective freewheeling diodes (D7, D8) are in each case arranged in the supply lines between the input inductor (E) and the voltage intermediate circuit ($U_{ZK}$) as switching means (S7, S8) for periodic disconnection of the voltage intermediate circuit ($U_{ZK}$) from the input converter (E), with the diodes (D7, D8) being arranged back-to-back in parallel.

**Revendications**

1. Procédé de réduction des oscillations propres de système ( $f_{sys}$ ) par rapport au potentiel terrestre ( PE ) dans un dispositif moteur électrique comportant un convertisseur à circuit intermédiaire de tension ( UR ) avec un convertisseur statique d'entrée ( E ) commandé et avec une inductance côté entrée, notamment une self d'entrée de réseau ( $L_K$ ), et un moteur électrique ( M ) raccordé au convertisseur, notamment un moteur travaillant selon la technique des bobines polaires, le circuit intermédiaire de tension ( $U_{ZK}$ ) étant périodiquement coupé du réseau alimentant ( N ) à des instants synchronisés sur un élément de déclenchement du convertisseur statique d'entrée ( E ).

2. Procédé selon la revendication 1, le convertisseur statique d'entrée ( E ) étant commandé selon un mode de fonctionnement à courant rectangulaire et le circuit intermédiaire de tension ( $U_{ZK}$ ) étant coupé du convertisseur statique d'entrée ( E ) tant que l'inductance côté entrée ( $L_K$ ) est parcourue par un courant.

3. Procédé pour faire fonctionner un convertisseur à circuit intermédiaire de tension ( UR ) avec convertisseur statique d'entrée ( E ) commandé et avec self d'entrée de réseau côté entrée ( $L_K$ ) selon le principe du convertisseur survolteur, le circuit intermédiaire de tension ( $U_{ZK}$ ) étant coupé périodiquement du réseau alimentant ( N ) à des instants synchronisés sur un élément de déclenchement du convertisseur statique d'entrée ( E ).

4. Procédé selon la revendication 2, le convertisseur statique d'entrée ( E ) étant commandé selon un mode de fonctionnement à courant rectangulaire et le circuit intermédiaire de tension ( $U_{ZK}$ ) étant coupé du convertisseur statique d'entrée ( E ) tant que la self d'entrée de réseau ( $L_K$ ) est parcourue par un courant.

5. Procédé selon la revendication 1 ou 3, le convertisseur statique d'entrée ( E ) étant commandé avec un modèle

EP 1 211 797 B1

d'impulsions à pondération sinusoïdale et le circuit intermédiaire de tension ( $U_{ZK}$ ) étant coupé du convertisseur statique d'entrée ( E ) tant que celui-ci ( E ) commute des vecteurs nuls ( NZ ; +++, --- ) .

6. Procédé selon la revendication 1 ou 3, le convertisseur statique d'entrée ( E ) étant commandé avec une modulation générale de vecteur spatial et le circuit intermédiaire de tension ( $U_{ZK}$ ) étant coupé du convertisseur statique d'entrée ( E ) tant que celui-ci ( E ) commute des vecteurs nuls ( NZ ; +++, --- ) .

7. Procédé selon l'une des revendications 2 ou 4 à 6, le circuit intermédiaire de tension ( $U_{ZK}$ ) étant rendu symétrique au potentiel terrestre ( PE ) par l'intermédiaire de condensateurs Y ( $C_{Y1}$, $C_{Y2}$ ) .

8. Procédé selon l'une des revendications précédentes, une coupure entre le circuit intermédiaire de tension ( $U_{ZK}$ ) et le convertisseur statique d'entrée ( E ) étant effectuée au moyen d'interrupteurs semi-conducteurs de puissance ( T7, T8 ) commutant, notamment avec des transistors IGBT.

9. Procédé selon l'une des revendications précédentes, le circuit intermédiaire de tension ( $U_{ZK}$ ) étant coupé du convertisseur statique d'entrée ( E ) sur deux phases.

10. Dispositif moteur électrique comportant un convertisseur à circuit intermédiaire de tension ( UR ) avec un convertisseur statique d'entrée ( E ) commandé et avec une inductance côté entrée, notamment une self d'entrée de réseau ( $L_K$ ), et un moteur électrique ( M ) raccordé audit convertisseur, notamment un moteur ( M ) travaillant selon la technique des bobines polaires, lequel dispositif moteur comporte au moins un moyen de commutation ( S7, S8 ; T7, T8 ) destiné à couper périodiquement le circuit intermédiaire de tension ( $U_{ZK}$ ) du réseau alimentant ( N ).

11. Convertisseur à circuit intermédiaire de tension ( UR ) avec un convertisseur statique d'entrée ( E ) commandé et avec une self d'entrée de réseau côté entrée ( $L_K$ ) pour un fonctionnement selon le principe du convertisseur survolteur, lequel convertisseur comporte au moins un moyen de commutation ( S7, S8 ; T7, T8 ) destiné à couper périodiquement le circuit intermédiaire de tension ( $U_{ZK}$ ) du réseau alimentant ( N ).

12. Dispositif selon la revendication 10 ou 11, chaque moyen de commutation ( S7, S8 ; T7, T8 ) destiné à couper périodiquement le circuit intermédiaire de tension ( $U_{ZK}$ ) du convertisseur statique d'entrée ( E ) pouvant être synchronisé sur un élément de déclenchement du convertisseur statique d'entrée ( E ).

13. Dispositif selon l'une des revendications précédentes 11 à 12, chaque moyen de commutation ( S7, S8 ; T7, T8 ) destiné à découpler de façon synchronisée le circuit intermédiaire de tension ( $U_{ZK}$ ) du convertisseur statique d'entrée ( E ) servant pendant des instants appropriés à ce que la self d'entrée de réseau ( $L_K$ ) soit parcourue par un courant.

14. Dispositif selon l'une des revendications 10 à 13, des transistors IGBT respectifs ( T7, T8 ) avec diode de roue libre respective ( D7, D8 ) étant agencés, comme moyen de commutation ( S7, S8 ) destiné à couper périodiquement le circuit intermédiaire de tension ( $U_{ZK}$ ) du convertisseur statique d'entrée ( E ), dans les lignes d'amenée entre le convertisseur statique d'entrée ( E ) et le circuit intermédiaire de tension ( $U_{ZK}$ ), les diodes ( D7, D8 ) étant agencées selon un montage tête-bêche.

## FIG 1

## FIG 2

## FIG 3

# FIG 4

# FIG 5

$$f_{res}(sys) \cong f_{sys} \qquad f_{res} \cong f_{res}(mot)$$

# FIG 6

# FIG 7

# FIG 10

**FIG 8**

**FIG 9**

## FIG 11

L1&&L2

300 V

0

-300 V

① ② ③ ④ ①

## FIG 12

L1&&L2
GW

300 V

0

-300 V

① ② ③ ④ ①

## FIG 13

OW

150 V

0

-150 V

## FIG 14

## FIG 15

## FIG 16

## FIG 17

$U_E^*(t)$

$U_E(t)$

## FIG 18

L1    L2    L3

$t_0$

FIG 19

FIG 20

FIG 21

FIG 22

FIG 23

FIG 24

FIG 25

# FIG 26